# EUROPEAN PATENT APPLICATION

(11) **EP 4 759 554 A1**
(43) Date of publication of application: **17.06.2026**
(21) Application number: 25222431.6
(22) Date of filing: 11.12.2025
(51) Int. Cl.: B41M 7/00, B32B 29/00, B32B 38/00, B41M 3/00, B41M 5/00, B65B 61/00, B41J 11/00

(54) **LAMINATED PACKAGING MATERIAL, CONVERTING UNIT FOR MANUFACTURING A LAMINATED PACKAGING MATERIAL, AND METHOD FOR MANUFACTURING A LAMINATED PACKAGING MATERIAL**

(30) Priority: 12.12.2024 EP 24219477
(71) Applicant: Tetra Laval Holdings & Finance S.A., 1009 Pully (CH)
(72) Inventor: ERIKSON, Fredrik, 221 86 Lund (SE); HANSEN, Nina, 221 86 Lund (SE)
(74) Representative: Tetra Pak Patent Attorneys

(57) **Abstract**

A continuous in-line method for manufacturing a laminated packaging material (100), comprising:
ink-jet printing (S20) a décor layer (130) on a paperboard layer (110),
applying (S30) a transparent layer (140) on the paperboard layer (110), and
drying (S40) the décor layer (130) and the transparent layer (140) by exposing the paperboard layer (110) to infrared radiation (IR).

## Description

### Technical Field

The invention relates to a method for manufacturing a laminated packaging material or liquid food packaging containers, a converting unit, and a laminated packaging material.

### Background Art

Packaging containers of the single use disposable type for liquid foods are often produced from a laminated packaging material. The laminated packaging material is produced as a continuous web, which is either used in a roll-fed filling machine or cut into separate blanks for use in a blank-fed packaging machine.

The laminated packaging material is produced using a converting procedure in which multiple materials are joined and processed to form the ready-to-use web of laminated packaging material.

During the converting procedure a paperboard layer, forming the core layer of the laminated packaging material, may be digitally printed on the outside (i.e., the side intended as the exterior side of the laminated packaging material) for example by ink-jet printing, dried, and laminated in between sealable layers. Optionally, the paperboard layer may be pre-coated before the printing, and/or already be bonded to one or more layers.

During the entire converting process, it is important to maintain a relatively even moisture level over the paperboard layer; not only for ensuring optimum performance of various converting processes, but also to control the desired properties of the final packaging container.

A suggested technique for drying the paperboard layer after digital printing using water-based inks, such as pigmented water-based inks, is infrared radiation.

While this technique allows for a fast drying, it has been observed that more powerful drying will also dry the paperboard layer, i.e., the moisture content of the paperboard layer will be reduced. The moisture loss in an area of the paperboard layer will vary with the printed design and in particular be related to the color printed on the area. An uneven paperboard moisture content will affect the converting process negatively, especially when the paperboard layer is creased prior to lamination. If the moisture content of an area is reduced to a certain level, the paperboard layer will in that area crack rather than bend, potentially reducing the quality of the final laminated packaging material and the packaging containers produced from the laminated packaging material. On the other hand, if the printed design is not sufficiently dried in certain areas, it may result in defects related to scuffing or smearing. Thus, there is a need in the art for improvements of laminated packaging material, especially with regards to ink drying.

### Summary

It is an object of the invention to at least partly overcome one or more of the above-identified limitations of the prior art. In particular, it is an object to provide a reliable and efficient method for manufacturing a laminated packaging material with a relatively even moisture level of the paperboard layer.

To solve these objects a continuous in-line method for manufacturing a laminated packaging material is provided. The method comprises ink-jet printing S20 a décor layer 130 on a paperboard layer 110, applying S30 a transparent layer 140 on the paperboard layer 110, and drying S40 the décor layer 130 and the transparent layer 140 by exposing the paperboard layer 110 to infrared radiation, IR. The ink-jet printing S20 of the décor layer 130 on a paperboard layer 110, and applying S30 the transparent layer 140 on the paperboard layer 110 may be performed in any order, i.e., the transparent layer 140 may be applied before, simultaneously or after the ink-jet printing S20 of the décor layer 130. The ink-jet printing S20 of the décor layer 130 and applying S30 of a transparent layer 140 may be done essentially simultaneously, such as simultaneously. The décor layer 130 and transparent layer 140 may be ink-jet printed S20 or applied (S30) directly on the paperboard layer 110 or on a primed layer 120 of the paperboard layer 110, wherein the primed layer 120 may be configured to modify the surface properties of the paperboard layer and increase printability, preferably the paperboard is primed using plasma treatment, corona treatment, surface conditioner and/or a clay coating. Drying S40 the décor layer 130 and the transparent layer 140 is typically done in a single step such that both the décor layer 130 and the transparent layer 140 are dried at the same time. Further, no additional layers are typically applied on top of the décor layer 130 or the transparent layer 140 before drying S40. As such, drying S40 the décor layer 130 and the transparent layer 140 may be done right after ink-jet printing S20 the décor layer 130 and/or applying S30 the transparent layer 140, i.e. with no intermediate steps in between.

A décor layer may comprise areas where ink is printed, and areas where no ink is printed. The amount of ink printed may also vary between areas of the décor layer. By applying a transparent layer comprising transparent ink or varnish on the paperboard layer on the areas that are not, or less, printed by ink during printing of the décor layer, a more even distribution of liquid is provided on the paperboard layer. The transparent layer may prevent the areas it covers from being overexposed to **IR** during the step of drying. Hence, the method is advantageous in that the variation of the moisture content across the paperboard layer after drying is minimized. The moisture content of the different areas may for instance differ less than 4% from each other, preferably less than 3 %, preferably less than 2 %, and more preferably less than 1 %.

The transparent layer may comprise transparent ink, transparent varnish, transparent resin, transparent solvent, transparent coating, and/or transparent film.

The step of applying the transparent layer may comprise ink-jet printing. Printing the transparent layer may occur simultaneously with, before, or after the printing of the décor layer.

The décor layer 130 may be ink-jet printed S20 on a first subsection 110a of the paperboard layer 110, and the transparent layer 140 may be applied S30 to a second subsection 110b of the paperboard layer, the second subsection 110b being distinct from the first subsection 110a. In addition, the décor layer 130 may be ink-jet printed S20 on a third subsection 110c with a smaller thickness than on the first subsection 110a. The transparent layer 140 may be applied S30 to the second subsection 110b with a thickness corresponding to a minimum thickness of the décor layer (130). The transparent layer 140 may be applied S30 such that the décor layer 130 and the transparent layer (140) together forms a layer having a substantially even moisture content over its entire surface, such as over the entire coated or printed surface of the paperboard layer 110. The transparent layer 140 may be applied S30 such that the décor layer 130 and the transparent layer 140 together forms a layer having a substantially even thickness over its entire surface, such as over the entire coated or printed surface of the paperboard layer 110.

A section 110s of the paperboard layer 110 may be exposed to IR during the step of drying S40, and the section 110s may consist of the first and second subsection 110a, 110b, and optionally the third subsection 110c. Hence, the full section being exposed to IR may be covered with either the décor layer or the transparent layer, advantageously reducing areas of the paperboard layer that are at risk of overexposure due to neither being provided with a décor layer, nor a transparent layer.

The step of drying S40 may comprise simultaneously exposing the décor layer 130 and the transparent layer 140 to infrared radiation (IR). By this, the full section to be dried of the paperboard layer may be exposed at once without risking overexposure on uncovered subsections, facilitating a fast and efficient manufacturing process.

The infrared radiation may have a spectral emission within 0.4 µm - 4 µm. Thus, the infrared radiation may be a near-infrared radiation, a short-wave infrared radiation, a mid-wave infrared radiation, or a radiation in several infrared regions.

The method may further comprise applying a priming layer to the paperboard layer prior to ink-jet printing the décor layer.

Applying a priming layer may for instance comprise coating the paperboard layer with a pre-coating, priming the paperboard layer by a plasma treatment or applying a surface conditioner, thereby changing the topology or properties relating to static electricity. The priming layer may further comprise a clay coat layer. The clay coat layer may form a water repellant surface on the paperboard layer meaning that the solvent of the ink cannot migrate be absorbed into the paperboard fibrous layer.

The priming layer may fully cover the paperboard layer, it may cover only the areas to be covered by the décor layer, or they may cover an intermediately sized area of the paperboard layer.

The paperboard layer may be an uncoated paperboard, or a paperboard laminated with one or more layers, for example polymer layers, before ink-jet printing and/or application of the transparent layer.

Preferably, the paperboard layer has a thickness of minimum 90 µm, and/or a weight of minimum 65 gram per square meter.

The method may further comprise providing S50 a crease line pattern to the paperboard layer 110, and laminating S60 at least a further layer 150 to the printed and creased paperboard layer 110. In one embodiment, the crease line pattern is repeated in a machine direction.

The paperboard layer may be transported along the machine direction at a substantially constant speed, for example on 100 m/min or faster.

Another aspect of the invention refers to a converting unit configured to manufacture a laminated packaging material. The converting unit may be configured to perform the continuous in-line method for manufacturing a laminated packaging material described herein and therefore implies all aspects disclosed with regard to that method.

The converting unit comprises a first printer unit 211 configured to print a décor layer 130 on a paperboard layer 110, a second printer unit 212 configured to apply a transparent layer 140 on the paperboard layer 110, and a drying station 220 configured to dry the décor layer 130 and the transparent layer 140 by exposing the paperboard layer 110 to infrared radiation (IR). The converting unit is preferably configured to manufacture a laminated packaging material as described herein. The first printer unit 211, the second printer unit 212, switched, meaning that the first printer unit 211 may be positioned before or after the second printer unit 212 in the converting unit 200, or the first printer unit 211 and the second printer unit 212 may be positioned together for a simultaneous application on the paperboard layer 110.

The converting unit may further comprise a creasing station 230 configured to provide a crease line pattern to the paperboard layer 110, and at least one lamination station 240 configured to laminate at least a further layer 160 to the printed and creased paperboard layer 110.

The first and second printer unit 211, 212 may be comprised in the same printing station 210. In other words, the same printing station 210 may be configured to print the décor layer and the transparent layer.

The first and second printer unit 211, 212 may be configured to print the décor layer 130 and the transparent layer 140 essentially simultaneously, such as simultaneously.

The first printer station may comprise an ink-jet printer. The second printer station may comprise an ink-jet printer or a flexographic printer.

The comprised stations may be arranged in the following order, upstream to downstream: printing station 210, drying station 220, creasing station 230, lamination station 240.

It is possible to have the creasing station and/or the lamination station downstream or upstream of the printing station; or to have more than one creasing stations and/or lamination stations located on both downstream and upstream of the printer station; or having a combined unit for the printer stations and the creasing station and/or lamination station that allows creasing and/or lamination before and/or after the printing.

The converting unit may further comprise a pre-coating station configured to apply a pre-coating layer to prepare the paperboard layer before being printed by one or both of the printer stations. As mentioned above, applying a pre-coating layer may comprise coating the paperboard layer, or priming the paperboard layer by a plasma treatment of the surface of the paperboard layer, or applying a surface conditioner, or in other ways modify the properties of a surface of the paperboard layer. The converting unit may further comprise a second drying station for drying the pre-coating layer.

Another aspect of the invention refers to a laminated packaging material. The laminated packaging material may be obtained from the converting unit and/or by the method steps described herein. The laminated packaging material comprises a paperboard layer having an ink-jet printed décor layer 130 on a first subsection 110a, and optionally on a third subsection 110c with a smaller thickness than on the first subsection 110a, and a transparent layer 140 on a second subsection 110b. The laminated packaging material is advantageous in that the variation of the moisture content across the paperboard layer is minimized.

The laminated packaging material may be characterized in that the moisture content of the first and second subsection 110a, 110b, and optional third subsection 110c, of the paperboard layer 110 differs less than 4% from each other, preferably less than 3 %, preferably less than 2 %, preferably less than 1 %. Preferably, the overall moisture content is 4% or more, more preferably between 5% and 10%, and even more preferably between 5% and 8.5%. As an example, the overall moisture content of the paperboard layer may be between 6% and 8.5% after ink-jet printing the décor layer and applying the transparent layer, and in the final laminated packaging material web, the overall moisture content of the paperboard layer may be substantially the same, or slightly lower, with a minimized variation of moisture content across the paperboard layer. This implies that the paperboard layer has not suffered any significant moisture loss in any are, at least of a magnitude that would result in any major defects of the laminated packaging material.

The décor layer and the transparent layer may be comprised in the same layer on top of the paperboard layer. Alternatively, the décor layer may be arranged on top of, or under, the transparent layer.

The laminated packaging material may have a crease line pattern and, for example, the crease line pattern may be cyclically repeated in a machine direction.

All possible features mentioned above should be assumed as valid for all aspects of the invention, as long as being under the scope of the claims.

Still other objectives, features, aspects, and advantages of the invention will appear from the following detailed description as well as from the drawings.

### Brief Description of the Drawings

Embodiments of the invention will now be described, by way of example, with reference to the accompanying schematic drawings.
Fig. 1 is a flow chart of a method for manufacturing a laminated packaging material according to an embodiment.
Fig. 2a is a cross-sectional view of a laminated packaging material according to an embodiment.
Fig. 2b is a cross-sectional view of a laminated packaging material according to an embodiment.
Fig. 2c is a cross-sectional view of a laminated packaging material according to an embodiment
Fig. 3 is a schematic view of a converting unit according to an embodiment.

### Detailed Description

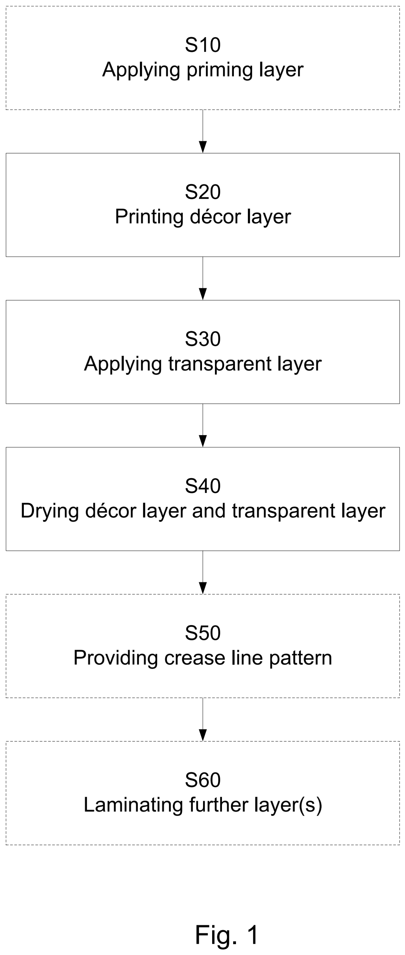

With reference to Fig. 1 an embodiment of a continuous in-line method for manufacturing a laminated packaging material 100 is illustrated. The method comprises an optional step of applying S10 a priming layer 120 on a paperboard layer 110. Applying S10 a priming layer 120 may for instance comprise coating the paperboard layer 110 with a pre-coating, clay coat, priming the paperboard layer 110 by a plasma treatment, flame treatment, corona treatment or applying a surface conditioner, thereby conditioning the surface, for instance like, changing the topology, surface tension, wettability, properties relating to static electricity, or other surface properties. A purpose of the priming layer 120 may be to form a water repellant surface on the paperboard layer 110 such that when the paperboard layer 110 is printed with an ink, the solvent of the ink cannot migrate into the paperboard layer 110. The priming layer 120 does not typically contain acid. The paperboard layer 110 may comprise paper, paperboard, or other cellulose-based material.

The method further comprises ink-jet printing S20 a décor layer 130 on the paperboard layer 110. During ink-jet printing, a digital image is recreated by propelling a plurality of ink droplets onto a substrate, such as a paperboard layer 110. The plurality of ink droplets may comprise a solvent and color pigments or dyes. The solvent may comprise water, nonvolatile organic content, and/or volatile organic content, for instance alcohols with high boiling point. Ink used for ink-jet printing may comprise a higher ratio of solvent relative color pigment than ink used for other printing techniques such as flexographic printing. For instance, ink-jet ink may comprise approximately 4 times more solvent content than flexographic ink. Further, the total amount of ink laid down on the paperboard layer 110 is typically several times more for ink-jet printing as compared to flexographic printing. Hence, for ink-jet printing it is even more important to provide a fast drying process such as IR drying, where the spectral energy transfer process is very efficient. The rapid removal of solvent from the plurality of ink droplets may further create a brighter and more vibrant print on the paperboard layer 110. As such, the method further comprises drying S40 the décor layer 130 by exposing the paperboard layer 110 to IR. By drying S40 the décor layer 130, the color pigments of the ink in the décor layer 130 are immobilized. The drying S40 is performed by evaporating at least some of the solvent by applying IR onto the paperboard layer 110. During infrared drying, the IR radiates onto the décor layer 150, where it to some extent will be absorbed by ink in the layer, causing solvent of the ink to evaporate from the paperboard layer 110. A common problem with IR drying however, is the penetration depth that allows the IR to not only interact with the décor layer, but also layers underneath, such as the paperboard layer 110. The intensity of the IR affects the level of transmission through the paperboard layer 110 and may to some extent be adjusted. Ideally, the wavelength, intensity, and exposure time of the IR radiation should be selected such that a minimum amount of energy is transmitted to the paperboard layer 110 and absorbed by its water molecules, thereby reducing the moisture content loss of the paperboard layer 110. Areas of the paperboard layer 110 that are not printed with an IR absorbing décor layer 130 may however suffer from overexposure and overdrying, or the paperboard layer 110 may have uneven moisture levels after the step of drying.

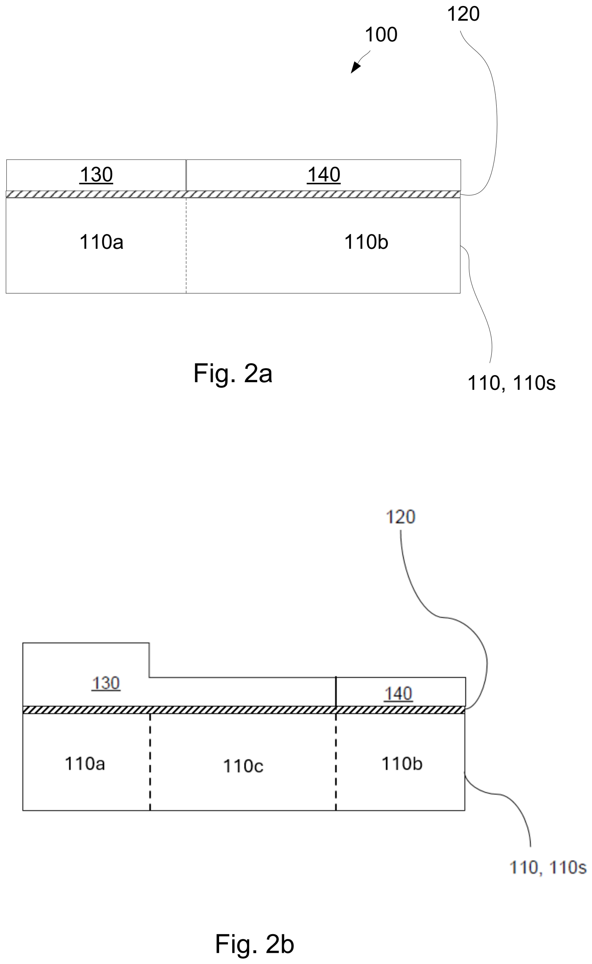

At least in order to mitigate these problems, the method further comprises applying a transparent layer 140 on the paperboard layer 110. The transparent layer 140 may be configured to absorb energy from the infrared radiation and thereby to some extent block IR energy from reaching the paperboard layer 110. The transparent layer 140 may comprise a transparent ink, coating, film, and/or varnish. The transparent layer 140 may comprise a solvent such as water, nonvolatile organic content, and/or volatile organic content, for instance alcohols. The step of applying S30 the transparent layer 140 may comprise ink-jet printing. The décor layer 130 may be ink-jet printed S20 on a first subsection 110a of the paperboard layer 110, and the transparent layer 140 may be applied S30 to a second subsection 110b being distinct from the first subsection, as is illustrated in Fig. 2a. The transparent layer 140 may be applied S30 such that the décor layer 130 and the transparent layer 140 together forms a layer having a substantially even moisture content over its entire surface. If the moisture content of the décor layer 130 and control layer 140 is substantially equal, this may be accomplished by providing the décor layer 130 and control layer 140 with substantially the same thickness, as exemplified in Fig. 2a.

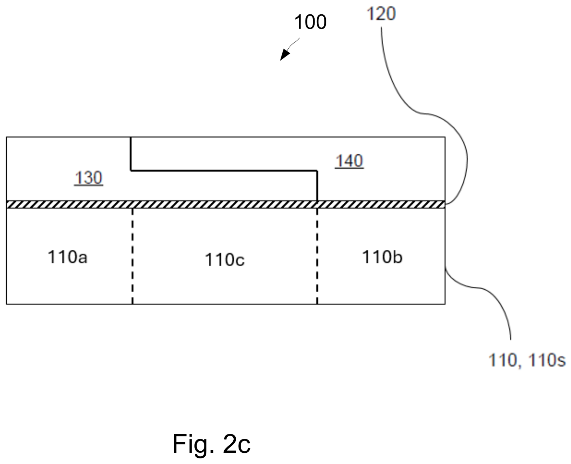

If the décor layer 130 is printed with varying thickness over the paperboard 110, the transparent layer 140 can either be applied with a thickness corresponding to the minimal thickness of the décor layer 130, as exemplified in Fig. 2b, or be applied to compensate for the varying thickness of the décor layer 130 to achieve a substantially equal moisture content and/or thickness over the paperboard 110, as exemplified in Fig. 2c.

In both Fig. 2b and 2c, the décor layer 130 is ink-jet printed on the first subsection 110a with a constant thickness and on a third subsection 110c with a smaller thickness than on the first subsection 110a. In Fig. 2b, the transparent layer 140 is applied on the second subsection 110b with a thickness corresponding to a minimum thickness of the décor layer 130, in this case the thickness of the décor layer on the third subsection 110c. It should be noted that the transparent layer 140 is applied with a thickness corresponding to the minimum thickness of the décor layer 130 also in the example of Fig. 2a, i.e. where the décor layer 130 is printed with a constant thickness. Regardless, applying the transparent layer 140 with a thickness corresponding to the minimum thickness of the décor layer 130 on sections 110b where no décor layer 140 is printed assures that at least a minimum level of moisture is provided also on these sections 110b. The minimum level substantially corresponds to the level of moisture provided by the thinnest décor layer 130, which means that the sections 110b which are not printed will not dry out more than the sections 110a, 110c having the thinnest print of décor 130.

In Fig. 2c, the transparent layer 130 is instead applied such that the décor layer 130 and the transparent layer 140 together forms a layer having a substantially even thickness and/or moisture content over its entire surface. In this example, the transparent layer 140 is applied to the second subsection 110b, i.e. where no décor layer 130 is printed, with a thickness corresponding to the maximum thickness of the décor layer 130, in this case the thickness of the décor layer 130 on the first subsection 110a. On the third subsection 110c, where a thinner décor layer 130 is printed, the transparent layer 140 is applied on top of or under the décor layer 130 to achieve a substantially equal total thickness of the décor layer 130 and transparent layer 140 over the subsections 110a, 110b, 110c of the paperboard 110. It should be noted that the transparent layer 140 is applied such that the décor layer 130 and the transparent layer 140 together forms a layer having a substantially even moisture content over its entire surface also in the example of Fig. 2a, i.e. where the décor layer 130 and transparent layer 140 are both printed/applied with a constant thickness. Regardless, applying the transparent layer 140 to achieve a substantially equal thickness and/or moisture content can be beneficial since it evens out the drying of the paperboard 110.

In the example of Fig. 2c, the third subsection 110c provided with both the décor layer 130 and transparent layer 140 is arranged between the first and second subsections 110a, 110b but the placement and shapes of the subsections could be altered depending on the intended print. It should be noted that a substantially equal thickness of the décor and transparent layers 130, 140 is typically achieved by applying the transparent layer 140 only on sections on which no or thinner décor layer 130 is printed, i.e. the second and third subsection 110b, 110c and not on sections where the décor layer is thickest, i.e. the first subsection 110a.

Similarly, the subsections 110a, 110b and 110c in the example of Fig. 2b could also be reshaped and positioned depending on the intended print.

The décor layer 130 may be applied before, simultaneously as, or after the transparent layer 140. As such, the laminated packaging material 100 illustrated in Figs. 2a, 2b and/or 2c may be a result from a manufacturing process as described above, and all aspects disclosed with regard to the method may be implied also for the laminated packaging material 100, as well as the other way around. The paperboard layer 110 of Figs. 2a, 2b and 2c is further illustrated with a priming layer 120 applied S10 under the décor layer 130 and the transparent layer 140. The moisture content of the first and second subsection 110a, 110b of the paperboard layer 110 may differ less than 4% from each other, preferably less than 3 %, preferably less than 2%, preferably less than 1 %, after the manufacturing process. Turning back to Fig. 1, the step of drying S40 further comprises drying S40 the transparent layer 140 by exposing the paperboard layer 110 to infrared radiation IR, preferably simultaneously. In the illustrated example of Fig. 2a, a section 110s of the paperboard layer 110 is exposed to infrared radiation IR during the step of drying S40, and the section consists of the first and second subsection 110a, 110b, the décor layer 130 and transparent layer 140 being applied thereon respectively. In the examples of Fig. 2b and 2c, a section 110s of the paperboard layer 110 exposed to infrared radiation IR during the step of drying S40 may comprise or consist of the first, second and third subsections 110a, 110b, 110c. In the example of Fig. 2c, the section 110s exposed to IR could instead comprise or consist of only two of these subsections 110a, 110b, 110c such that at least a part of the décor layer 130 and a part of the transparent layer 140 is exposed to IR simultaneously, e.g., the first subsection 110a, may be combined with one of the second and third subsections 110b, 110c.

Beneficially, a large section 110s of the paperboard layer 110 may be exposed to IR at once without risking uneven or overexposure of IR, due to all subsections 110a, 110b having an IR absorbing layer 130, 140. By this, a more efficient method for drying and manufacturing is enabled.

Although IR drying is beneficial for many reasons, the step of drying S40 the décor layer 130 does not have to exclusively rely on IR exposure. The step of drying may further comprise applying hot air to the print surface. This is beneficial as it facilitates a maintained moisture content at a minimized drying time. The hot air may be applied during or after the IR exposure. By this, time efficiency of the method is ensured while still ensuring a desired level of moisture content in the paperboard layer. The method may further comprise determining an adjusted drying power based on a determined moisture parameter, the determined moisture parameter being indicative of the paperboard moisture content, and the infrared radiation and/or hot air may be applied at the adjusted drying power. By this, an efficient way to maintain the moisture level of the paperboard layer is ensured. The adjusted drying power may be determined separately for the infrared radiation and the hot air, such that the infrared radiation and the hot air are applied at a ratio based on the determined moisture parameter. Hence, efficiency of the process may be increased even more.

The infrared radiation may have a spectral emission within 0.4 µm - 4µm, preferably within 0.8 µm - 2.5 µm (i.e., the near infrared region of the electromagnetic spectrum), and the layers 130, 140 may be configured to absorb radiation in the same spectrum. The décor layer 130 may have a thickness and/or a water content related to the color printed. As an example, the décor layer 130 may in an area where only cyan is printed comprise 6 gsm liquid, in an area where magenta and yellow is printed comprise 12 gsm liquid, and in an area where cyan, magenta, yellow, and black is printed comprise 14 gsm liquid. The transparent layer 140 may be applied to areas of the décor layer 130 comprising less liquid than other areas, so that the variation of the liquid content of the décor layer 130 is minimized. As an example, a transparent layer 140 comprising 14 gsm may be applied S30 to an area of the paperboard layer 110 having no printed S20 décor layer 130, a transparent layer 140 comprising 6.5 gsm may be applied S30 to an area of the paperboard layer 110 having a décor layer 130 printed with only cyan, and no transparent layer 140 may be applied S30 to an area of the paperboard layer 110 having a décor layer 130 printed with cyan, magenta, yellow and black.

The method may further comprise providing S50 a crease line pattern to the paperboard layer 110. The crease line pattern facilitates the formation of a packaging container from the laminated packaging material 100, not illustrated. The crease line pattern may be repeated in a machine direction. The machine direction may be defined as the direction parallel to the movement of the paperboard layer 110 through a manufacturing equipment such as a converting unit 200, or as the circumferential direction of a roll of paper used for providing the paperboard layer 110. The laminate packaging material 100 may have a machine direction, and a transverse direction, defined in perpendicular direction to the machine direction. The dimension of the laminate packaging material 100 in the machine direction may be substantially larger than in the transverse direction. The IR may be applied at a substantially perpendicular angle towards the surface of the paperboard layer 110 during the step of drying S40, and the energy from the IR may move in straight lines into the paperboard layer 110. The step of creasing S50 the paperboard layer 110 may be performed shortly after the step of drying S40. Hence, the dwell time for the moisture to equalize in the paper layer 110 is minimized, and an uneven moisture level after the step of drying S40 will lead to uneven moisture level in the paperboard layer 110 during the step of creasing S50. The paperboard layer 110 may react differently to creasing S50 depending on its moisture level. As an example, while a high moisture area of the paperboard layer 110 may be provided S50 with a satisfactory crease line pattern, a low moisture area may be provided with crease cracks and/or other defects.

The method may further comprise laminating S60 at least a further layer 150 to the printed and creased paperboard layer 110. The laminated packaging material 100 may for instance comprise two sealable layers arranged on the outside of the laminated packaging material 100, to constitute the outside or exterior of a packaging container formed from the laminated packaging material 100, and the inside of the laminated packaging material web 100, to be in direct contact with a filled food product in the packaging container. The sealable layers are preferably liquid tight. The sealable layers may be heat sealable or comprise a thermoplastic material. Further, a barrier layer (not shown) may be laminated to the paperboard layer 110, preferably below the paperboard layer 110. The barrier layer may comprise any barrier material that is suitable to maintain a food safe environment for the packaged liquid food product. This covers metals, such as aluminum foil, polymer materials, such as ethylene vinyl alcohol copolymers, EVOH, or polyamides, PA, polysaccharides such as starch or fibrillar or crystalline cellulose, polymer-based film substrates being provided with a barrier coating; the barrier coating being selected from metals, metal oxides, inorganic oxides, other inorganic compounds or carbon-based coatings, such as amorphous diamondlike carbon, DLC, coatings. The barrier layer may be a cellulose based material and/or a composite material or multilayer coating material, for example comprising a non-metal material such as plastic, paper or cellulose-based material and a metal material for instance comprising Aluminum. During a conversion process comprising creasing S60 and laminating S70 it is of even higher importance to maintain an adequate moisture level in the paperboard layer 110 in order to prevent cracking and other processing defects.

In Fig. 1, the method is illustrated as sequential with the different steps S10, S20, S30, S40, S50, S60 performed in a certain order. It should be realized that a number of variations are possible. The transparent layer 140 may for instance be applied before or during the printing S20 of the décor layer 130.

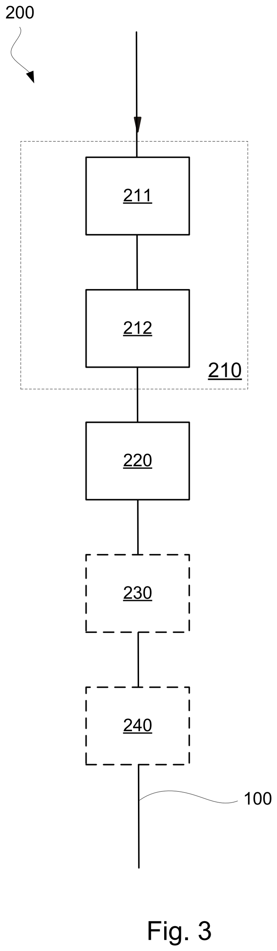

During the method, the paperboard layer 110 may be transported along the machine direction as defined above at a substantially constant speed. An example path of the paperboard layer 110 through a converting unit 200 is illustrated in Fig. 3 as a continuous line with an arrowhead pointing in the machine direction. As such, Fig. 3 illustrates a converting unit 200 configured to manufacture a laminated packaging material 100. The converting unit 200 may be configured to perform the method as described above with reference to Fig. 1 in order to produce a laminated packaging material 100 as described with reference to Fig. 2a, and all aspects disclosed with regard to the method and the material 100 may be implied also for the converting unit 200, as well as the other way around. The converting unit 200 comprises a first printer unit 211 configured to print a décor layer 130 on the paperboard layer 110, and a second printer unit 212 configured to apply a transparent layer 140 on the paperboard layer 110. The first and second printer unit 211, 212 may be comprised in the same printing station 210. The order of the first printer unit 211, the second printer unit 212, switched, meaning that the first printer unit 211 may be positioned before or after the second printer unit 212 in the converting unit 200. The first printer 211 may comprise an ink-jet print module, and the second printer unit 212 may comprises the same or a separate ink-jet print module. The converting unit 200 may also comprise a priming station (not shown) with reference to the method explained above, before the printing station 210.

The converting unit 200 further comprises a drying station 220 configured to dry the décor layer 130 and the transparent layer 140 by exposing the paperboard layer 110 to infrared radiation IR. The drying station 220 may further be configured to dry the layers 130, 140 by exposing the paperboard layer 110 to hot air. The drying station 220 may comprise a hot air dryer distinct from an infrared dryer, and the hot air dryer may be arranged downstream the infrared dryer. The benefits of drying with IR and combining IR with hot air are explained above. The drying station 220 may be arranged to extend in the transverse direction, and across the paperboard layer 110.

The converting unit 200 may further comprise a feeding unit (not shown) configured to continuously forward the paperboard layer 110, preferably at a constant speed and/or in the machine direction as defined above.

The converting unit 200 may further comprise a creasing station 230 configured to provide a crease line pattern to the paperboard layer 110, and at least one lamination station 240 configured to laminate at least a further layer to the printed and creased paperboard layer 110. The creasing station 230 and the lamination station 240 are illustrated with dashed lines in Fig. 3, indicating that they are optional. During handling in the creasing station 230 and lamination station 240, there is a risk that a paperboard layer with locally reduced moisture content will be cracked rather than bent, potentially reducing the quality of the final laminated packaging material and the packaging containers produced from the laminated packaging material. On the other hand, if the printed design is not sufficiently dried, it may result in defects related to scuffing or smearing. Hence, the combination of applying S30 a transparent layer 140 and drying S40 with IR is important for the result, as further explained above.

The stations 211, 212, 220, 230, 240 of the converting unit 200 are illustrated in a certain order, upstream to downstream, in Fig. 3. Analogously with the method as described above, it should be realized that a number of variations are possible.

From the description above follows that, although various embodiments of the invention have been described and shown, the invention is not restricted thereto but may also be embodied in other ways within the scope of the subject-matter defined in the following claims.

## Claims

1. A continuous in-line method for manufacturing a laminated packaging material (100), comprising:
ink-jet printing (S20) a décor layer (130) on a paperboard layer (110),
applying (S30) a transparent layer (140) on the paperboard layer (110), and
drying (S40) the décor layer (130) and the transparent layer (140) by exposing the paperboard layer (110) to infrared radiation (IR).

2. Method according to claim 1, wherein ink-jet printing (S20) the décor layer (130) and applying (S30) a transparent layer (140) is done essentially simultaneously.

3. Method according to claim 1 or 2, wherein the décor layer (130) and transparent layer (140) are ink-jet printed (S20) or applied (S30) directly on the paperboard layer (110) or on a primed layer (120) of the paperboard layer (110), wherein the primed layer (120) is configured to modify the surface properties of the paperboard layer and increase printability, preferably the paperboard is primed using plasma treatment, corona treatment, surface conditioner and/or a clay coating.

4. Method according to any preceding claim, wherein the step of applying (S30) the transparent layer (140) comprises ink-jet printing.

5. Method according to claim any preceding claim, wherein the décor layer (130) is ink-jet printed (S20) on a first subsection (110a) of the paperboard layer (110), and the transparent layer (140) is applied (S30) to a second subsection (110b) of the paperboard layer, the second subsection (110b) being distinct from the first subsection (110a).

6. Method according to claim 5, wherein the décor layer (130) is ink-jet printed (S20) on a third subsection (110c) with a smaller thickness than on the first subsection (110a).

7. Method according to claim 5 or 6, wherein the transparent layer (140) is applied (S30) to the second subsection (110b) with a thickness corresponding to a minimum thickness of the décor layer (130).

8. Method according to claim 5 or 6, wherein the transparent layer (140) is applied (S30) such that the décor layer (130) and the transparent layer (140) together forms a layer having a substantially even moisture content over its entire surface.

9. Method according to claim 5 or 6 or 8, wherein the transparent layer (140) is applied (S30) such that the décor layer (130) and the transparent layer (140) together forms a layer having a substantially even thickness over its entire surface.

10. Method according to any one of claims 5-9, wherein a section (110s) of the paperboard layer (110) is exposed to infrared radiation (IR) during the step of drying (S40), and the section (110s) consists of the first and second subsection (110a, 110b), and optionally the third subsection (110c).

11. Method according to any preceding claim, wherein the step of drying (S40) comprises simultaneously exposing the décor layer (130) and the transparent layer (140) to infrared radiation (IR).

12. Method according to any preceding claim, wherein the infrared radiation (IR) has a spectral emission within 0.4 µm - 4 µm.

13. Method according to any preceding claim, further comprising applying (S10) a priming layer (120) to the paperboard layer (110) prior to ink-jet printing (S20) the décor layer (130)

14. Method according to any preceding claim, further comprising:
providing (S50) a crease line pattern to the paperboard layer (110), and
laminating (S60) at least a further layer (150) to the printed and creased paperboard layer (110).

15. Method according to any preceding claim, wherein the paperboard layer (110) is transported along a machine direction at a substantially constant speed.

16. A converting unit (200) configured to manufacture a laminated packaging material (100), comprising:
a first printer unit (211) configured to print a décor layer (130) on a paperboard layer (110),
a second printer unit (212) configured to apply a transparent layer (140) on the paperboard layer (110), and
a drying station (220) configured to dry the décor layer (130) and the transparent layer (140) by exposing the paperboard layer (110) to infrared radiation (IR).

17. The converting unit (200) according to claim 16 further comprising a creasing station (230) configured to provide a crease line pattern to the paperboard layer (110), and at least one lamination station (240) configured to laminate at least a further layer (160) to the printed and creased paperboard layer (110).

18. The converting unit (200) according to claim 16 or 17, wherein the first and second printer unit (211, 212) are comprised in the same printing station (210).

19. The converting unit (200) according to claim 18, wherein the first and second printer unit (211, 212) are configured to print the décor layer (130) and the transparent layer (140) essentially simultaneously.

20. The converting unit (200) according to claim 17 and one of 18 or 19, wherein the comprised stations are arranged in the following order, upstream to downstream: printing station (210), drying station (220), creasing station (230), lamination station (240).

21. A laminated packaging material (100) comprising a paperboard layer (110) having
an ink-jet printed décor layer (130) on a first subsection (110a), and optionally on a third subsection (110c) with a smaller thickness than on the first subsection (110a), and
a transparent layer (140) on a second subsection (110b).

22. The laminated packaging material (100) according to claim 21, **characterized in that** the moisture content of the first and second subsection **(110a, 110b),** and optional third subsection (110c), of the paperboard layer (110) differs less than 4% from each other, preferably less than 3 %, preferably less than 2 %, preferably less than 1 %.
